# EUROPÄISCHE PATENTSCHRIFT

(11) **EP 1 314 858 B1**
(45) Veröffentlichungstag und Bekanntmachung des Hinweises auf die Patenterteilung: **28.01.2009**
(21) Anmeldenummer: 02024038.8
(22) Anmeldetag: 28.10.2002
(51) Int. Cl.: F01D 21/04, F01D 25/16

(54) **Rotorlagerung mit einer Sollbruchstelle für Turbomaschinen**
Frangible bearing support for a turbomachine rotor
Support fusible pour un palier d'une turbomachine

(30) Priorität: 23.11.2001 DE 10157576
(43) Veröffentlichungstag der Anmeldung: 28.05.2003
(73) Patentinhaber: MTU Aero Engines GmbH, 80995 München (DE)
(72) Erfinder: Diepolder, Wolfgang, Dr., 85356 Freising (DE); Wöhrl, Bernhard, Dr., 82131 Gauting (DE)

(56) Entgegenhaltungen:
- DE-A1- 2 510 793
- DE-U- 7 440 064
- GB-A- 2 130 340
- GB-A- 2 281 105
- GB-A- 2 322 914
- US-A- 3 927 537

## Beschreibung

Die Erfindung betrifft eine Rotorlagerung mit einer Sollbruchstelle, insbesondere für einen Rotor einer Strömungsmaschine gemäß dem Oberbegriff des Patentanspruchs 1.

Bekanntlich weist der Rotor einer Strömungsmaschine, beispielsweise der Rotor eines Strahltriebwerks eines Flugzeuges, als Rotorlagerung im allgemeinen mindestens ein Festlager und ein Loslager auf. Diese Lager stützen den umlaufenden Rotor gegenüber dem stillstehenden Teil, z. B. dem Gehäuse, in radialer und axialer Richtung ab und leiten dabei die auf die Rotorlagerung wirkenden Lagerkräfte über sogenannte Lagerträger in das Gehäuse ein.

Nachteilig dabei ist, dass auch unvorhergesehene, hohe auf die Rotorlagerung wirkende Lagerbeanspruchungen über die Lagerträger in das Gehäuse eingeleitet werden, was im ungünstigstem Fall eine Zerstörung des Gehäuses verursachen kann. So können beispielsweise in Strahltriebwerken eines Flugzeuges Vogelschlag oder Schaufelresonanz einen sogenannten Schaufelbruch am Rotor herbeiführen. Das Überlaufen des abgebrochenen Schaufelstücks durch die nachfolgenden Schaufeln des Rotors und das dadurch geänderte dynamische Verhalten des Rotors bewirken eine drastische Erhöhung der Lagerkräfte, die über die Lagerträger in das Gehäuse und in die Triebwerksaufhängung gelangen, was zu einer Zerstörung des Gehäuses, der Triebwerksaufhängung oder gar zu Schäden an der Flugzeugzelle führt.

Das Dokument GB-A-2 28 105 betrifft eine Rotorlagerung mit einer Sollbruchstelle, wobei ein nicht rotierender Lagerträger geteilt und über axiale Scherbolzen verbunden ist. Bei Überschreiten einer definierten radialen Lagerkraft brechen die Scherbolzen und geben das Lager mit Welle - zumindest begrenzt - radial frei.

Das Dokument GB-A-2 130 340 bezieht sich auf die Befestigung eines sogenannten Fans am Ende einer Gasturbinenwelle. Bei Überschreiten einer definierten radialen Unwucht wird der Fan begrenzt radial freigegeben, so dass er um seinen neuen, defektbedingten Schwerpunkt rotieren kann. Eine spezielle, radial bewegliche Kupplung sorgt dafür, dass auch im defekten Zustand noch Drehmoment von der Welle auf den exzentrischen Fan übertragen wird.

Das Dokument DE 74 40 064 U beansprucht eine Vorrichtung zur Verstärkung einer mechanischen Kraft mit einem Innenkegel, einer relativ zu diesem axial beweglichen Kegelspitze sowie einem Druckring. Die Kraftübertragung zwischen diesen Elementen erfolgt über Kugeln. Diese Vorrichtung wandelt eine Axialkraft in eine verstärkte Axialkraft um.

Der Erfindung liegt die Aufgabe zugrunde, hier Abhilfe zu schaffen durch eine neue Gestaltung einer Rotorlagerung mit einer Sollbruchstelle, um beim Auftreten von unvorhergesehenen hohen Lagerbeanspruchungen eine Beschädigung bzw. Zerstörung des Gehäuses weitestgehend zu vermeiden.

Gemäß der Erfindung ist die gestellte Aufgabe durch die kennzeichnenden Merkmale des Patentanspruches 1 gelöst. Weitere Merkmale der Erfindung ergeben sich aus den Unteransprüchen.

In bekannter Weise ist bei der Rotorlagerung der das Drehlager abstützende nicht-rotierende Lagerträger geteilt und weist somit zwei Trennflächen auf, die jeweils senkrecht zu der Rotationsachse des Drehlagers angeordnet sind. Erfindungsgemäß sind zwischen den beiden Trennflächen mehrere über den Umfang des nicht-rotierenden Lagerträgers gleichmäßig verteilte und in den beiden Trennflächen paarweise gegenüberstehende als Führungsflächen wirkende Vertiefungen eingebracht, in denen sich als Kugeln ausgeführte Führungskörper befinden. Durch die koaxial zu der Rotationsachse angeordneten Spannschrauben sind die beiden Trennflächen und die in den Führungsflächen eingebrachten Führungskörper spielfrei in Anlage gehalten. Über die zusammenwirkenden Führungsflächen in Form von Kegel- bzw. Kugel-und Zylinderflächen und Führungskörper werden die an dem nicht-rotierenden Lager träger angreifende Radiallagerkräfte in axiale Zugkräfte überführt, die von den Spannschrauben aufgenommen werden. Die Spannschrauben sind dabei so dimensioniert, dass bei Überschreiten einer definierten maximalen Zugbeanspruchung die Spannschrauben brechen.

Auf diese Weise ist eine Sollbruchstelle realisiert, die dazu führt, dass bei unvorhergesehen hohen Lagerbelastungen die Spannschrauben brechen und den nicht-rotierenden Lagerträger freigeben. Damit wird der Kraftschluss zwischen dem nicht-rotierenden Lagerträger und dem tragenden Gehäuse unterbrochen, was zwar zu einer teilweisen Zerstörung der Rotorlagerung führt, aber verhindert, dass solche extremen Lagerbelastungen in das tragende Gehäuse eingeleitet werden. Eine Zerstörung oder weitreichende Beschädigungen des tragenden Gehäuses werden dadurch verhindert.

Die vorgesehene Sollbruchstelle kann dabei vorzugsweise bei einem als Loslager ausgeführten Drehlager, aber auch bei einem als Festlager ausgeführten Drehlager angeordnet sein.

Vorteilhafter Weise sind die Spannschrauben tailliert ausgeführt. Dadurch lässt sich der Spannungsquerschnitt der Schrauben eindeutig definieren und folglich die maximal zulässige Bruchkraft der Spannschrauben optimal bestimmen.

Die Erfindung ist nachfolgend anhand eines in der Zeichnung mehr oder minder schematisch dargestellten Ausführungsbeispiels beschrieben. Es zeigen:
- Fig. 1: eine Schnittdarstellung einer ein Drehlager umfassenden Rotorlage- rung für die erste Stufe eines nicht weiter dargestellten Strahltrieb- werks mit der erfindungsgemäß ausgeführten Sollbruchstelle;
- Fig. 2: eine vergrößerte Darstellung der Rotorlagerung mit der Sollbruchstelle aus Fig. 1;
- Fig. 3: eine weitere, vergrößerte Darstellung der Rotorlagerung mit der Soll- bruchstelle aus Fig. 1 mit zwei als Träger der Führungsflächen dienen- den Ringe, nämlich einem linken Ring und einem rechten Ring, sowie den darin geführten Führungskörper;
- Fig. 4 a: eine vergrößerte, detaillierte Darstellung eines Ausführungsbeispiels für die Ringe mit den eingebrachten Führungsflächen aus Fig. 3;

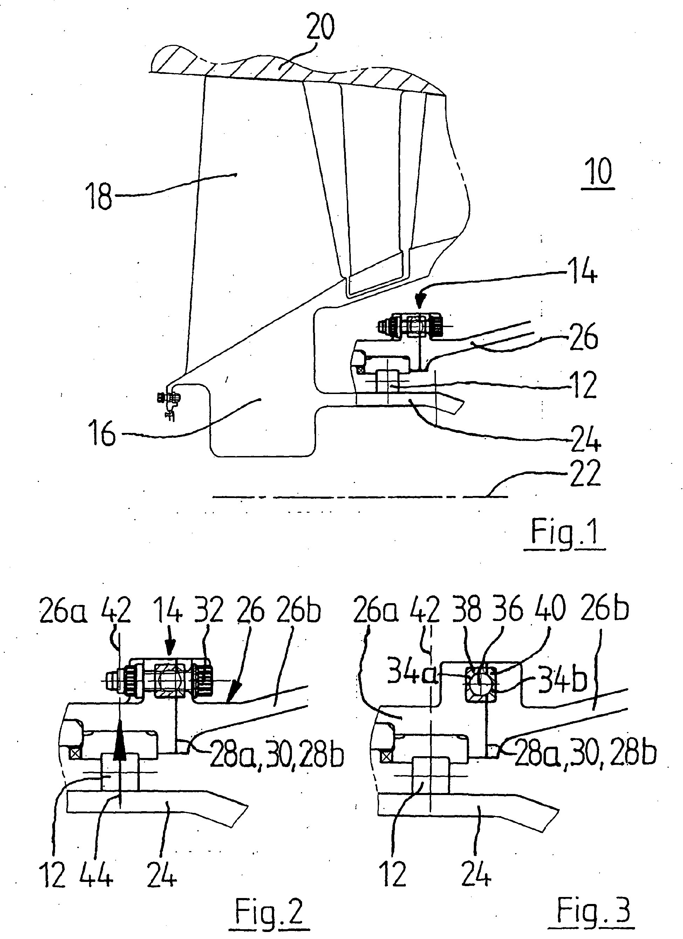

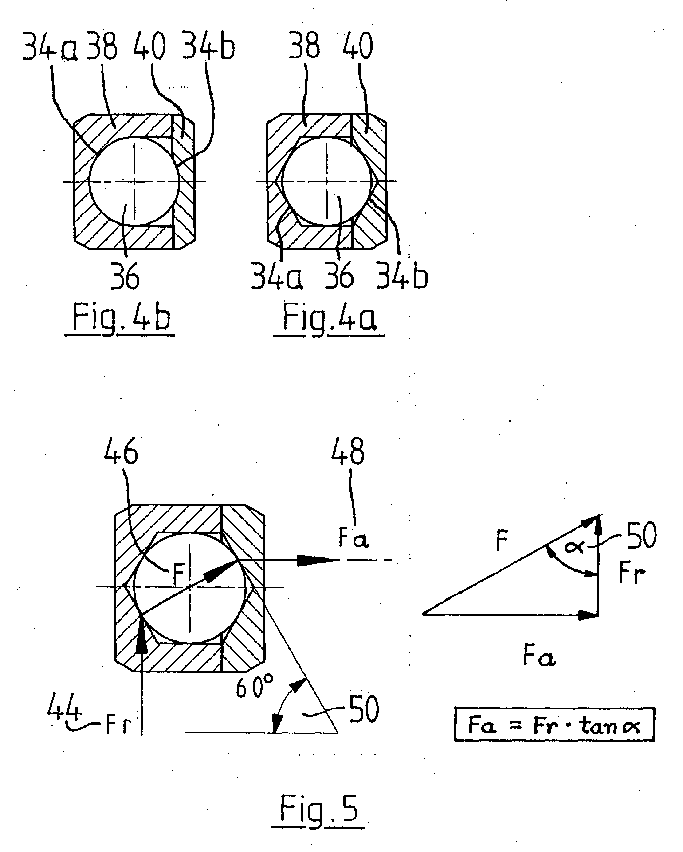

- Fig. 4 b: eine weitere vergrößerte, detaillierte Darstellung eines anderen Aus- führungsbeispiels für die Ringe mit den eingebrachten Führungsflä- chen aus Fig. 3;
- Fig. 5: eine schematische Darstellung der durch das Zusammenwirken von Führungsflächen und Führungskörper hervorgerufenen Umlenkung ei- nes radialen Kraftvektor in einen Kraftvektor mit einer radialen und a- xialen Komponente und

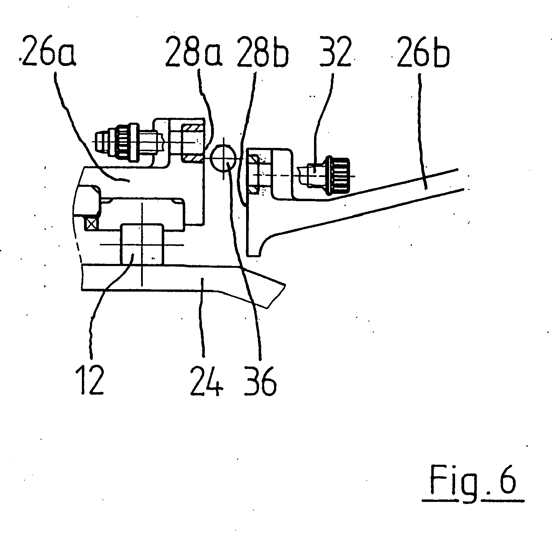

- Fig. 6: eine weitere, vergrößerte Darstellung der Rotorlagerung mit der Soll- bruchstelle aus Fig. 1 nach Bruch der Spannschrauben.

Eine in Fig. 1 insgesamt mit der Bezugsziffer 10 bezeichnete Rotorlagerung für die erste Stufe eines nicht weiter dargestellten Strahltriebwerks weist ein Drehlager 12 mit einer Sollbruchstelle 14 auf.

Das nicht weiter dargestellte Strahltriebwerk umfasst einen Rotor 16 mit Laufschaufeln 18, die innerhalb eines zugehörigen Triebwerksgehäuses 20 - im folgenden als tragendes Gehäuse bezeichnet - angeordnet sind. Mit dem um eine Rotationsachse 22 sich drehenden Rotor 16 ist ein Lagerträger 24 lösbar verbunden.

Zwischen diesem mit-rotierenden Lagerträger 24 und einem nicht-rotierenden Lager träger 26 ist das Drehlager 12 angeordnet, im vorliegenden Ausführungsbeispiel ein Wälzlager der Rollenbauweise.

Das Drehlager 12 ist hierbei ein Loslager, welches nur radiale Lagerkräfte aufnehmen kann. Ein zugehöriges, die axialen Lagerkräfte aufnehmendes Festlager ist aus Gründen der Übersichtlichkeit nicht dargestellt.

Wie Fig. 2 zeigt, ist der nicht-rotierende Lagerträger 26 geteilt ausgebildet und umfasst einen linken Lagerträgerteil 26 a mit einer flanschartigen Trennfläche 28 a und einen rechten Lagerträgerteil 26 b mit einer flanschartigen Trennfläche 28 b. Der linke Lagerträgerteil 26 a und der rechte Lagerträgerteil 26 b bilden mit ihren beiden Trennflächen 28 a und 28 b eine gemeinsame Berührungsebene 30, die senkrecht zu der Rotationsachse 22 des Rotors 16 angeordnet ist.

Im vorliegenden Ausführungsbeispiel ist zwischen den beiden Trennflächen 28 a und 28 b kein Spalt vorhanden, d. h. dass sich die beiden Trennflächen 28 a und 28 b in direkter Anlage befinden. Für spezielle Bauformen kann aber auch ein Spalt vorgesehen sein.

Der linke Teil des nicht-rotierenden Lagerträgers 26 a und der rechte Teil des nicht-rotierenden Lagerträgers 26 b sind kraftschlüssig miteinander verbunden, und zwar über mehrere über den Umfang des nicht-rotierenden Lagerträgers 26 gleichmäßig verteilte und axial orientierte, also koaxial zur Rotationsachse (22) angeordnete, Spannschrauben 32. Wie noch auszuführen ist, übernehmen die Spannschrauben 32 die Funktion der Sollbruchstelle 14.

Wie in Fig. 3 dargestellt, weisen die Trennflächen 28 a und 28 b der beiden nicht-rotierenden Lagerträgerteile 26 a und 26 b mehrere über den Umfang des Lagerträgers 26 gleichmäßig verteilte und in den beiden Trennflächen 28 a und 28 b paarweise axial gegenüberstehende Führungsflächen 34a, 34b auf, in die Führungskörper 36 eingebracht sind. Im vorliegenden Ausführungsbeispiel sind als Führungskörper 36 Kugeln, nämlich Kugellagerkugeln, in die Führungsflächen 34a, 34b und somit in die Berührungsebene 30 zwischen die beiden Lagerträgerteile 26 a und 26 b eingebracht.

Als Träger der Führungsflächen 34a, 34b dienen zwei beiderseits der Berührungsebene 30 angeordnete Ringe, nämlich ein linker Ring 38 und ein rechter Ring 40. Der linke Ring 38 und der rechte Ring 40 ist jeweils zentrisch in den linken Teil des nicht-rotierenden Lagerträgers 26 a bzw. in den rechten Teil des nicht-rotierenden Lagerträgers 26 b integriert. Durch die eingebrachten Kugeln 36 wird der linke Ring 38 und der rechte Ring 40 zentriert, wodurch die beiden Lagerträgerteile 26 a und 26 b ihrerseits zentriert werden. Über die bereits beschriebenen, in Umfangsrichtung axial ausgerichteten, vorzugsweise taillierten Spannschrauben 32 erfolgt eine spielfreie axiale Verbindung zwischen den beiden nicht-rotierenden Lagerträgerteilen 26 a und 26 b.

Die in die beiden Ringe 38, 40 eingebrachten Führungsflächen 34a, 34b können, wie in Fig. 4a und Fig. 4b dargestellt, unterschiedlich ausgebildet sein. Gemäß der Fig. 4 a ist die linke Führungsfläche 34a aus einer zylinderförmigen Grundfläche und einer anschließenden kegelförmigen Spitze als Scheitel zusammengesetzt, wobei der Durchmesser der zylinderförmigen Grundfläche dem Durchmesser des geführten Führungskörper 36 entspricht. Die rechte Führungsfläche 34b besteht ausschließlich aus einer kegelförmigen Spitze.

In der Fig. 4b ist eine weitere Gestaltungsmöglichkeit der Führungsflächen 34a, 34b dargestellt. Dabei ist die linke Führungsfläche 34a aus einer zylinderförmigen Grundfläche und einer konkaven Halbkugel als Scheitel aufgebaut. Der Durchmesser der zylinderförmigen Grundfläche und der Durchmesser der konkaven Halbkugel entsprechen dem Durchmesser des Führungskörpers 36. Die rechte Führungsfläche 34b entspricht einer konkaven Teilkugel, d.h. einer Kugelkalotte, deren Radius dem Radius des Führungskörpers 36 entspricht oder größer sein kann.

Die Wirkungsweise der vorstehend beschriebenen Rotorlagerung mit der dargestellten Sollbruchstelle ist folgende:

Die aus den dynamischen und statischen Betriebslasten des Rotors 16 hervorgerufenen Kräfte werden auf die den rotierenden Lagerträger 24 und den nicht-rotierenden Lagerträger 26 umfassende Rotorlagerung 10 übertragen. Entlang einer idealisierten Wirkungslinie 42 erfolgt über den nicht-rotierenden Lagerträger 26 die Einleitung einer resultierenden radialen Lagerkraft Fᵣ 44 in das tragende Gehäuse, vgl. Fig. 2.

Durch die in die beiden Teile des nicht-rotierenden Lagerträgers 26 a und 26 b eingebrachten Ringe 38, 40 und die in den Ringen 38, 40 beiderseits der Berührungsebene 30 vorliegenden Führungsflächen 34a, 34b werden die als Kugeln ausgebildeten Führungskörper 36 fixiert. Die Führungsflächen 34a, 34b und die eingebrachten Führungskörper 36 lenken die radiale Lagerkraft Fᵣ 44 derart um, dass in der Berührungsebene 30 zwischen den beiden Lagerträgerteilen 26 a und 26 b ein neuer Kraftvektor F 46 mit einer axialen Kraftkomponente Fₐ 48 und der radialen Kraftkomponente Fᵣ 44 vorliegt, vgl. Fig. 3 in Verbindung mit Fig. 5

Die Umlenkung der radialen Kraft Fᵣ 44 in den neuen Kraftvektor F 46 mit der axialen Kraftkomponente Fₐ 48 und der radialen Kraftkomponente Fᵣ 44 erfolgt dabei unabhängig von der Umfangswinkellage der radialen Kraft Fᵣ 44 an der Kugel 36.

Wie weiterhin aus Fig. 5 zu entnehmen ist, führt die im vorliegenden Ausführungsbeispiel mit einem halben Kegelöffnungswinkel 50 von beispielsweise 60° ausgeführte Spitze der Führungsfläche 34b und die daraus resultierende Umlenkung der radialen Kraft Fᵣ 44 zu einer axialen Kraft Fₐ 48, die gemäß Fₐ = Fᵣ x tan 60° größer ist, als die ursprünglich auf der idealisierten Wirkungslinie 42 wirkende radiale Lagerbelastung Fᵣ 44.

Die axiale Kraftkomponente Fₐ 48 führt zu der bereits genannten Zugbeanspruchung in den Spannschrauben 32, die, wie bereits ausgeführt wurde, die beiden nicht-rotierenden Lagerträgerteile 26 a und 26 b über die Berührungsebene 30 hinweg kraftschlüssig miteinander verbinden.

Sobald die radiale Last Fᵣ 44 deutlich über allen zulässigen Manöverlasten liegt, z. B. infolge einer drastischen Erhöhung der Lagerbelastung durch Schaufelbruch, bewirkt die in die Spannschrauben 32 eingeleitete axiale Kraftkomponente Fₐ 48 deren Bruch.

Die Spannschrauben 32 wirken also als Sollbruchstelle 14 für den Fall, dass die auf die Spannschrauben 32 wirkende axiale Kraft Fₐ 48 über der zulässigen definierten maximalen Bruchkraft der Spannschrauben 32 liegt, vgl. auch Fig. 6. Als Folge davon brechen, wie bereits erwähnt, die Spannschrauben 32 und der Kraftschluss zwischen den beiden Lagerträgerteilen 26 a und 26 b ist unterbrochen. Dies führt zwar zu einer teilweisen Zerstörung der Rotorlagerung, aber die Einleitung der erhöhten Lagerkräfte in das tragende Gehäuse wird sicher verhindert. Eine Zerstörung des Gehäuses, der Triebwerksaufhängung oder gar Schäden an der Flugzeugzelle werden somit weitestgehend ausgeschlossen.

Die in den Figuren dargestellten Kugelführungen sind asymmetrisch, wobei jeweils im linken Ring 38 tiefe Führungsflächen 34a vorhanden sind, die die spärischen Führungskörper 36 großteils aufnehmen und bei Wirksamwerden praktisch nur eine Drehbewegung der Führungskörper 36 um ihre Mittelpunkte zulassen. Im rechten Ring 40 sind flache Führungsflächen 34b vorhanden, auf denen die Führungskörper 36 abrollen - oder zumindest gleiten - können und dabei die gewünschte Axialkraft erzeugen. Durch diese Bauweise wird eine besonders gute Zentrierung der Ringe 38, 40 erreicht,

Es wäre aber z.B. auch möglich, bei der Ausführung gemäß Figur 4a und 5 den zylindrischen Bereich der Führungsfläche 34a im Durchmesser größer zu wählen als den Führungskörper 36, so dass auch im Ring 38 eine begrenzte Abrollbewegung möglich wird. Dies hätte als Vorteil weniger Reibung in den Führungen zur Folge, wobei aber voraussichtlich die Zentrierung der Ringe 38, 40 nicht ganz so präzise wäre, wie bei der dargestellten Ausführung. Es wäre ebenfalls möglich, die Führungsflächen 34a, 34b spiegelsymmetrisch zur Berührungsebene 30 auszuführen. Dabei könnte jede Führungsfläche 34a, b in geeigneter Weise z.B. aus einer Kegelfäche und einer Zylinderfläche oder aus einer Teilkugelfläche (Kugelkalotte) und einer Kegelstumpffläche zusammengesetzt sein. Bei der Gestaltung der Führungsflächen ist primär zu beachten, dass die gewünschte Kraftumlenkung und - verstärkung erzielt wird.

### Bezugszeichenliste

- 10: Rotorlagerung
- 12: Drehlager
- 14: Sollbruchstelle
- 16: Rotor
- 18: Leitschaufeln
- 20: Rotationsachse
- 22: Turbinengehäuse
- 24: rotierender Lagerträger
- 26: nicht-rotierender Lagerträger
- 26 a: linker Teil des nicht-rotierenden Lagerträgers
- 26 b: rechter Teil des nicht-rotierenden Lagerträgers
- 28 a: Trennfläche des linken Teils des nicht-rotierenden Lagerträgers
- 28 b: Trennfläche des rechten Teils des nicht-rotierenden Lagerträgers
- 30: Berührungsebene
- 32: Spannschrauben
- 34a: linke Führungsflächen
- 34b: rechte Führungsflächen
- 36: Führungskörper
- 38: linker Ring
- 40: rechter Ring
- 42: Wirkungslinie
- 44: radiale Lagerkraft Fᵣ / radiale Kraftkomponente Fᵣ
- 46: umgelenkter Kraftvektor F
- 48: axiale Kraftkomponente Fₐ
- 50: halber Kegelöffnungswinkel

## Patentansprüche

1. Rotorlagerung (10) mit einer Sollbruchstelle (14), insbesondere für einen Rotor (16) einer Strömungsmaschine, welche ein zwischen einem nicht-rotierenden Lagerträger (26) und einem rotierenden Lagerträger (24) angeordnetes Drehlager (12) aufweist, wobei zwecks Bildung der Sollbruchstelle (14) der nicht-rotierende Lagerträger (26) geteilt ist (26a, 26b) und zwei senkrecht zur Rotationsachse (22) des Drehlagers (12) angeordnete Trennflächen (28 a, 28 b) aufweist, und wobei über den Umfang des Lagerträgers mehrere axial orientierte Spannschrauben (32) vorbestimmter zugfestigkeit gleichmäßig verteilt sind, **dadurch gekennzeichnet, dass** sich in mehreren über den Umfang des Lagerträgers (26) gleichmäßig verteilten und in den beiden Trennflächen (28 a, 28 b) paarweise axial gegenüberstehenden Führungsflächen (34a, 34b) eingebrachte Führungskörper (36) befinden, und die beiden Trennflächen (28 a, 28 b) mit den in die Führungsflächen (34a, 34b) eingebrachten Führungskörpern (36) über die axial orientierten Spannschrauben (32) spielfrei in Anlage gehalten sind, **dass** jede der Führungsflächen (34a) in der einen Trennfläche (28 a) sich aus einer axial orientierten, zylinderförmigen Grundfläche und einer anschließenden kegelförmigen Spitze als Scheitel zusammensetzt, und dass jede der Führungsflächen (34b) in der anderen Trennfläche (28b) als axial orientierte, kegelförmige Spitze ausgeführt ist, oder dass jede der Führungsfiächen (34a) in der einen Trennfläche (28 a) sich aus einer axial orientierten, zylinderförmigen Grundfläche und einer konkaven Halbkugel als Scheitel zusammensetzt, wobei der Durchmesser der zylinderförmigen Grundfläche und der Durchmesser der konkaven Halbkugel dem Durchmesser des geführten Führungskörpers (36) entsprechen, und dass jede der Führungsflächen (34b) in der anderen Trennfläche (28b) als axial orientierte, konkave Teilkugel ausgeführt ist, deren Radius dem Radius des Führungskörpers (36) entspricht oder größer ist, und dass die Führungskörper (36) als Kugeln ausgebildet sind, wodurch an dem Lagerträger (26) angreifende Radiallagerkräfte (44) über die mit den Führungsflächen (34a, 34b) zusammenwirkenden Führungskörper (36) in an den Spannschrauben (32) angreifende axiale Zugkräfte (48) umlenkbar sind, die bei Überschreiten einer vorbestimmten maximalen Zugbeanspruchung zum Bruch der Spannschrauben (32) führen.

2. Rotorlagerung nach Anspruch 1, **dadurch gekennzeichnet, dass** als Träger der Führungsflächen (34a, 34b) zwei Ringe dienen, nämlich ein rechter und ein linker Ring (38, 40), die ihrerseits in je einer der beiden Trennflächen (28 a, 28 b) zentrisch befestigt sind.

3. Rotorlagerung nach Anspruch 1 oder 2, **dadurch gekennzeichnet, dass** die Spannschrauben (32) tailliert ausgeführt sind.

4. Rotorlagerung nach einem der vorangehenden Ansprüche, **dadurch gekennzeichnet, dass** zwischen den beiden Trennflächen (28 a, 28 b) ein Spalt vorhanden ist.

5. Rotorlagerung nach einem der Ansprüche 1 bis 3, **dadurch gekennzeichnet, dass** sich die beiden Trennflächen (28 a, 28 b) in direkter Anlage befinden.

6. Rotorlagerung nach einem der vorangehenden Ansprüche, **dadurch gekennzeichnet, dass** ein halber Kegelöffnungswinkel α (50) größer 45° eine Verstärkung der axialen Zugkraft Fₐ (48) an den Spannschrauben (32) in Relation zur Radiallagerkraft Fᵣ (44) gemäß der Formel Fₐ=F_{r ·} tanα bewirkt

7. Rotorlagerung nach einem der vorangehenden Ansprüche, **dadurch gekennzeichnet, dass** das Drehlager (12) als Loslager, insbesondere als Radiallager, ausgeführt ist.

8. Rotorlagerung nach einem der Ansprüche 1 bis 6, **dadurch gekennzeichnet, dass** das Drehlager (12) als Festlager ausgeführt ist.

## Claims

1. Rotor bearing (10) with a predetermined breaking point, in particular for a rotor (16) of a turbomachine, having a pivot bearing positioned between a non-rotating bearing support (26) and a rotating bearing support (24), the non-rotating bearing support (26) being divided (26a, 26b) and having two parting planes (28 a, 28 b) positioned perpendicular to the axis of rotation (22) of the pivot bearing (12) in order to form the pre-determined breaking point, a plurality of axially oriented tensioning screws (32) of predetermined tensile strength being distributed equally around the circumference of the bearing support,
**characterised in that**
guide bodies (36) are located in a plurality of guide surfaces (34a, 34b) which are distributed equally around the circumference of the bearing support (26) and configured in pairs positioned axially opposite one another in the two parting planes (28 a, 28 b), and the two parting planes (28 a, 28 b) are held in contact with the guide bodies (36) in the guide surfaces (34a, 34b) without play by the axially oriented tensioning screws (32); each of the guide surfaces (34a) in one parting plane (28 a) comprises an axially oriented, cylindrical base area and an adjoining conical point as the apex and each of the guide surfaces (34a) in the other parting plane (28 b) is designed as an axially oriented, conical point, or each of the guide surfaces (34a) in one parting plane (28 a) comprises an axially oriented, cylindrical base area and a concave hemisphere as the apex, the diameter of the cylindrical base area and the diameter of the concave hemisphere corresponding to the diameter of the guided guide body (36), and each of the guide surfaces (34b) in the other parting plane (28 b) is designed as an axially oriented, concave part cone with a radius which is the same size as or greater than the radius of the guide body (36); and the guide bodies (36) are designed as spheres as a result of which radially bearing forces (44) acting on the bearing support (26) can be diverted, via the guide bodies (36) which co-operate with the guide surfaces (34a, 34b), into axial tensile forces (48) acting on the tensioning screws (32) which, when they exceed a predetermined maximum tensile load, cause the tensioning screws to break.

2. Rotor bearing in accordance with claim 1,
**characterised in that**
two rings, namely a right-hand and a left-hand ring (38, 40) each of which is fixed centrally in one of the two parting planes (28 a , 28 b), serve as supports for the guide surfaces (34a, 34b).

3. Rotor bearing in accordance with claim 1 or 2,
**characterised in that**
the tension screws (32) are waisted.

4. Rotor bearing in accordance with one of the preceding claims,
**characterised in that**
a gap is provided between the two parting planes (28 a, 28 b).

5. Rotor bearing in accordance with one of claims 1 to 3,
**characterised in that**
the two parting planes (28 a, 28 b) bear directly upon one another.

6. Rotor bearing in accordance with one of the preceding claims,
**characterised in that**
a half cone opening angle α (50) greater than 45° effects an increase in the axial tensile force Fₐ (48) at the tensioning screws (32) in relation to the radial bearing force Fᵣ (44) in accordance with the formula Fₐ = Fᵣ · tanα.

7. Rotor bearing in accordance with one of the preceding claims,
**characterised in that**
the pivot bearing (12) is designed as a movable bearing, in particular as a radial bearing.

8. Rotor bearing in accordance with one of claims 1 to 6,
**characterised in that**
the pivot bearing (12) is designed as a fixed bearing.

## Revendications

1. Logement de rotor (10) avec un point destiné à la rupture (14), en particulier pour un rotor (16) d'une machine fluidique, qui comporte un palier pivotant (12) disposé entre un support de palier non pivotant (26) et un support de palier pivotant (24), dans lequel, pour former le point destiné à la rupture (14), le support de palier non pivotant (26) est divisé (26a, 26b) et comporte deux surfaces de séparation (28a, 28b) disposées perpendiculairement à l'axe de rotation (22) du palier pivotant (12) et dans lequel plusieurs vis de serrage (32) orientées axialement, présentant une résistance à la traction prédéterminée, sont réparties régulièrement sur la circonférence du support de palier, **caractérisé en ce que** des corps de guidage insérés (36) sont placés dans plusieurs surfaces de guidage (34a, 34b) réparties régulièrement sur la circonférence du support de palier (26) et opposées axialement par paires dans les deux surfaces de séparation (28a, 28b) et les deux surfaces de séparation (28a, 28b), conjointement avec les corps de guidage (36) insérés dans les surfaces de guidage (34a, 34b), sont maintenues en appui sans jeu à l'aide des vis de serrage (32) orientées axialement, **en ce que** chacune des surfaces de guidage (34a) dans une surface de séparation (28a) est constituée par une surface de base cylindrique orientée axialement et, comme sommet, par une pointe conique raccordée à celle-ci et **en ce que** chacune des surfaces de guidage (34b) dans l'autre surface de séparation (28b) est réalisée sous forme de pointe conique orientée axialement ou **en ce que** chacune des surfaces de guidage (34a) dans une surface de séparation (28a) est constituée par une surface de base cylindrique orientée axialement et par un hémisphère concave comme sommet, le diamètre de la surface de base cylindrique et le diamètre de l' hémisphère concave correspondant au diamètre du corps de guidage guidé (36), et **en ce que** chacune des surfaces de guidage (34b) dans l'autre surface de séparation (28b) est réalisée sous forme de sphère partielle concave orientée axialement dont le rayon correspond ou est supérieur au rayon du corps de guidage (36) et **en ce que** les corps de guidage (36) sont réalisés sous forme de sphères, de sorte que les forces radiales de palier (44) appliquées au support de palier (26) peuvent être converties en forces de traction (48) appliquées aux vis de serrage (32) par l'intermédiaire des corps de guidage (36) coopérant avec les surfaces de guidage (34a, 34b), lesquelles forces de traction entraînent la rupture des vis de serrage (32) en cas de dépassement d'un effort de traction maximal prédéterminé.

2. Logement de rotor selon la revendication 1, **caractérisé en ce que** deux bagues servent de supports pour les surfaces de guidage (34a, 34b), à savoir une bague droite et une bague gauche (38, 40) qui sont elles-mêmes fixées chacune au centre dans l'une des deux surfaces de séparation (28a, 28b).

3. Logement de rotor selon la revendication 1 ou 2, **caractérisé en ce que** les vis de serrage (32) sont évidées.

4. Logement de rotor selon l'une quelconque des revendications précédentes, **caractérisé en ce qu'**un interstice est prévu entre les deux surfaces de séparation (28a, 28b).

5. Logement de rotor selon l'une quelconque des revendications 1 à 3, **caractérisé en ce que** les deux surfaces de séparation (28a, 28b) sont directement en appui l'une sur l'autre.

6. Logement de rotor selon l'une quelconque des revendications précédentes, **caractérisé en ce qu'**un demi angle d'ouverture de cône α (50) supérieur à 45° assure un renforcement de la force de traction axiale Fₐ (48) sur les vis de serrage (32) par rapport à la force de palier radiale Fᵣ (44) suivant la formule Fₐ = F_{r ·} tanα

7. Logement de rotor selon l'une quelconque des revendications précédentes, **caractérisé en ce que** le palier de pivotement (12) est réalisé sous forme de palier libre, en particulier sous forme de palier radial.

8. Logement de rotor selon l'une quelconque des revendications 1 à 6, **caractérisé en ce que** le palier de pivotement (12) est réalisé sous forme de palier fixe.
